# EUROPÄISCHE PATENTSCHRIFT

(11) **EP 2 696 117 B1**
(45) Veröffentlichungstag und Bekanntmachung des Hinweises auf die Patenterteilung: **01.02.2017**
(21) Anmeldenummer: 12179452.3
(22) Anmeldetag: 07.08.2012
(51) Int. Cl.: F16K 27/02, F16K 31/50, F16K 1/02

(54) **Ventiloberteil**
Valve top
Partie supérieure de soupape

(43) Veröffentlichungstag der Anmeldung: 12.02.2014
(73) Patentinhaber: Flühs Drehtechnik GmbH, 58515 Lüdenscheid (DE)
(72) Erfinder: Thurau, Friedrich, 58849 Herscheid (DE)
(74) Vertreter: Patentanwälte Dörner & Kötter PartG mbB

(56) Entgegenhaltungen:
- EP-A1- 0 768 434
- EP-A1- 1 331 425
- EP-A1- 2 182 258
- DE-A1- 3 822 793
- DE-A1-102008 054 103
- DE-A1-102009 043 502
- US-A1- 2006 033 066

## Beschreibung

Die Erfindung betrifft ein Ventiloberteil mit einem Kopfstück, dass von einer Spindel mittig durchsetzt ist, die in dem Kopfstück um ihre Längsachse rotierbar gelagert ist und über die ein Ventilkörper betätigbar ist.

Ventiloberteile der vorgenannten Art sind in den unterschiedlichsten Ausgestaltungen bekannt. So ist beispielsweise aus der GB 2 137 736 A ein Ventiloberteil bekannt, bei dem zur Steuerung des Durchflusses eines Fluids ein Ventilstempel vorgesehen ist, der über die Spindel innerhalb des Kopfstückes linear bewegbar ist. Aus der DE 20 2008 001 495 U1 ist weiterhin ein Ventiloberteil für Armaturen bekannt, bei dem ein Kopfstück von einer Spindel durchsetzt ist, die mit einer Steuerscheibe verbunden ist, wobei in dem Kopfstück eine drehfeste Einlassscheibe angeordnet ist, die zwischen der Steuerscheibe und einer ebenfalls drehfesten Auslassscheibe angeordnet ist. Durch Rotieren der Spindel ist die Steuerscheibe gegenüber der drehfesten Einlassscheibe bewegbar. Bei den Ventiloberteilen der vorgenannten Art ist in der Spindel oberhalb des Kopfstücks ein Einstich angeordnet, in dem eine Wellensicherung zumeist in Form eines Springrings federnd eingelegt ist. Die Wellensicherung liegt an dem Kopfstück an und verhindert das Eindringen der Spindel in das Kopfstück über das vorgesehene Maß hinaus. Das Aufbringen der Wellensicherung gestaltet sich im Zuge der Montage jedoch aufwändig. Insbesondere bei Verwendung einer Wellensicherung aus einem zum Kopfstück bzw. zur Spindel unterschiedlichen Material ist zudem die Korrosionsgefahr erhöht.

In der EP 2 182 258 A1 ist ein Ventiloberteil beschrieben, bei dem eine Spindel über ein Gewinde mit einem Ventilkörper verbunden ist, der durch Drehung der Spindel axial bewegbar ist. In der EP 1 331 425 A1 ist ein elektromagnetisches Ventil offenbart.

Die US 2006/0033066 A1 offenbart ein zweiteiliges Ventil mit einem indexierbaren Schließelement für medizinische Anwendungen, wie es beispielsweise in Infusionsschläuchen zum Einsatz kommt. Es ist ein Hahn mit einem an diesem angeformten drehbaren Schlüssel in der rohrförmigen Aufnahme eines Kegelteils drehbar angeordnet, wobei der Schlüssel eine Durchgangsbohrung aufweist, die durch Drehung des Schlüssels mit zwei in dem Kegelteil mündenden, diametral angeordneten Leitungsanschlüssen in Flucht bringbar ist und wobei der Schlüssel endseitig mit Indexiermittel ausbildenden Vorsprüngen und Einbuchtungen versehen ist, die mit endseitig in dem Kegel angeordneten Einbuchtungen und Vorsprüngen in Eingriff bringbar sind.

In der DE 3822793 A1 ist ein Ventil zur Beeinflussung des Durchflusses durch einen Strömungskanal offenbart, das in einem Strömungskanal eine feststehende eine Durchbrechung aufweisende Trennwand und ein relativ zu dieser drehbares eine Durchbrechung aufweisendes Dichtelement aufweist.

Hier will die Erfindung Abhilfe schaffen. Der Erfindung liegt die Aufgabe zu Grunde, ein Ventiloberteil der vorgenannten Art zu schaffen, dass aufwandminimiert montierbar ist. Gemäß der Erfindung wird diese Aufgabe durch die Merkmale des kennzeichnenden Teils des Patentanspruchs 1 gelöst.

Mit der Erfindung ist ein Ventiloberteil der vorgenannten Art geschaffen, welches aufwandminimiert montierbar ist.

Gemäß der Erfindung weist das Kopfstück eine radial in Richtung der Spindellängsachse ragende, zumindest bereichsweise umlaufende Rastnase auf, die in eine in die Spindel eingebrachte, umlaufende Ringnut eingreift. Hierdurch ist die Bauteiltiefe reduziert. Die Montage erfolgt durch einfaches Einpressen der Spindel in das Kopfstück, wobei die Rastnase des Kopfstücks in die Ringnut der Spindel eingreift.

In Ausgestaltung der Erfindung ist die Ringnut als Kerbnut ausgebildet. Hierdurch ist das Eingleiten der Rastnase erleichtert. Bevorzugt sind die Kanten der umlaufenden Ringnut wie auch der Rastnase abgerundet ausgebildet.

In alternativer Ausgestaltung der Erfindung weist die Spindel eine radial nach außen ragende, zumindest bereichsweise umlaufende Rastnase auf, die in eine in das Kopfstück eingebrachte, die Spindel umgebende Ringnut eingreift. Auch in dieser Ausgestaltung ist die Montage erleichtert. Dabei wird beim Einbringen der Spindel in das Kopfstück in die an der Spindel angeordnete Rastnase in die Ringnut des Kopfstücks eingebracht. Vorteilhaft ist die in das Kopfstück eingebrachte Ringnut als Kerbnut mit bevorzugt abgerundeten Kanten ausgebildet.

In einem weiteren Beispiel weisen die Spindel sowie das Kopfstück jeweils eine zueinander zugewandte umlaufende Ringnut auf, wobei ein Rastring angeordnet ist, der in die zueinander zugewandten Ringnuten von Spindel und Kopfstück eingreift. Der Rastring kann dabei zur Montage in die Ringnut des Kopfstücks oder in die Ringnut der Spindel eingebracht werden, wodurch eine Rastnase gebildet ist, welche beim Einbringen der Spindel in das Kopfstück in die verbleibende Ringnut des Kopfstücks bzw. der Spindel eingreift. Zur Vermeidung von Korrosion sowie zur Erhöhung der Elastizität der so ausgebildeten "Rastnase" ist der Rastring bevorzugt aus Kunststoff hergestellt.

Ein Ausführungsbeispiel der Erfindung ist in den Zeichnungen dargestellt und wird nachfolgend im Einzelnen beschrieben. Es zeigen:
- Figur 1: die schematische Darstellung eines Ventiloberteils;

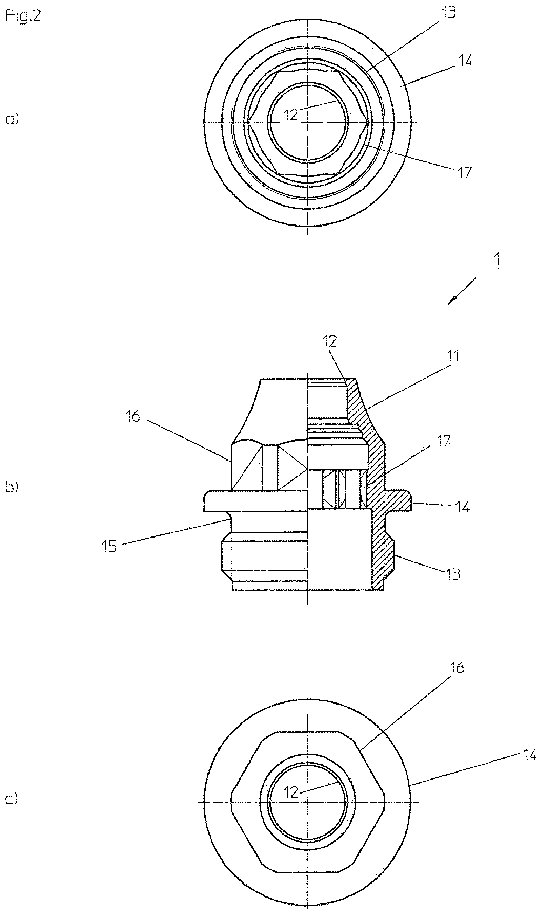

- Figur 2: die Darstellung des Kopfstücks des Ventiloberteils gemäß Figur 1
a) in der Ansicht von unten;
b) im Teilschnitt;
c) in der Draufsicht und

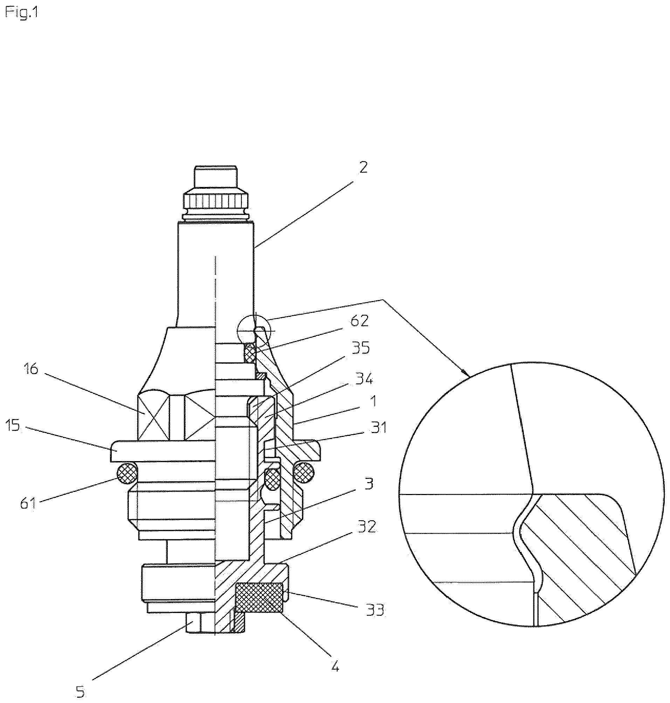

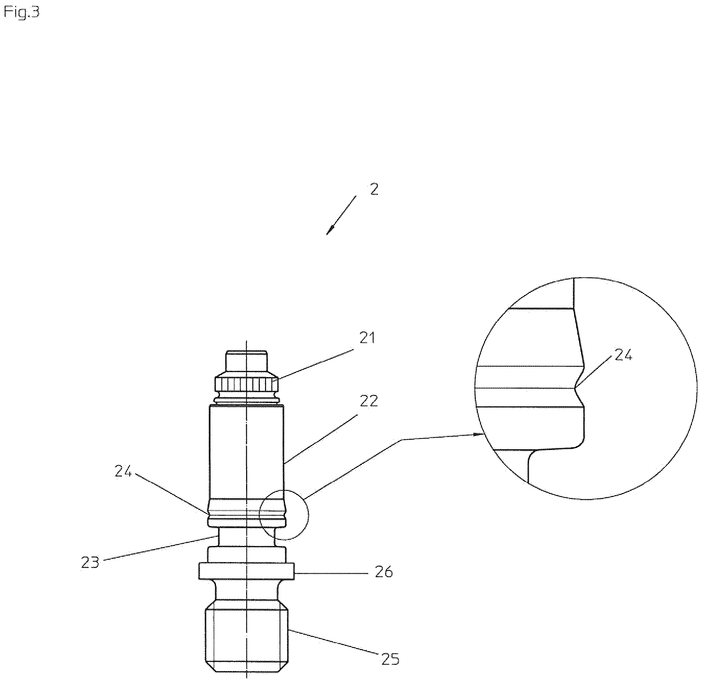

Figur 3 die Spindel des Ventiloberteils aus Figur 1 in der Seitenansicht. Das als Ausführungsbeispiel gewählte Ventiloberteil weist ein Kopfstück 1 auf, das von einer in dieser radial geführten Spindel 2 mittig durchsetzt ist. Über die Spin-del 2 ist ein Ventilkörper 3 betätigbar, der mit dem Ventilsitz eines - nicht dargestellten - Gehäuses zur Anlage kommt. Der Ventilkörper 3 weist einen im Wesentlichen zylindrischen Ventilstempel 33 auf, der eine Dichtscheibe 4 aufnimmt. Das Kopfstück 1 besteht aus einem symmetrischen Hülsenartigen Hohlkörper, dessen beide Stirnflächen offen sind. Auf seiner dem Ventilkörper 3 abgewandten Seite weist das Kopfstück 1 einen durchmesserreduzierten Abschnitt 11 auf. An dem freien Ende des durchmesserreduzierten Abschnitts 11 ist innen umlaufend eine Rastnase 12 angeformt, die als ringförmig umlaufender Vorsprung ausgebildet ist. An seinem dem Ventilkörper 3 zugewandten Ende ist das Kopfstück 1 außen mit einem Anschlussgewinde 13 versehen. Mit Hilfe des Anschlussgewindes 13 ist das Kopfstück 1 in das - nicht dargestellte - Gehäuse einer Armatur einschraubbar.

Nach dem Einschrauben liegt ein Einschraubbund 14 des Kopfstücks 1 auf dem - nicht dargestellten - Gehäuse einer Armatur auf. Der Einschraubbund 14 weist auf seiner dem Anschlussgewinde 13 zugewandten Seite eine Ringnut 15 zur Aufnahme des O-Rings 61 auf. Das Einschrauben in die Armatur erfolgt mittels eines Außenmehrkants 16, der auf der dem Anschlussgewinde 13 abgewandten Seite des Einschraubbundes 14 vorgesehen ist. in Höhe des Einschraubbundes 14 ist der hülsenartige Teil 11 des Kopfstücks 1 innen mit einem Innensechskant 17 versehen.

Die Spindel 2 ist im Wesentlichen massiv ausgeführt. Sie ist an ihrer dem Kopfstück 1 abgewandten Seite außen mit einem Außenvielkant 21 für die Befestigung eines - nicht dargestellten - Drehgriffs versehen. Anschließend ist außen an der Spindel 2 eine Zylinderfläche 22 vorgesehen, mit der die Spindel 2 in dem Kopfstück 1 radial geführt ist. In der Zylinderfläche 22 ist eine Ringnut 23 zur Aufnahme eines O-Rings 62 eingebracht. Der O-Ring 62 dichtet die Spindel 2 gegen das Kopfstück 1 ab. Oberhalb der Ringnut 23 ist in der Zylinderfläche 22 eine umlaufende Kerbnut 24 zur Aufnahme der Rastnase 12 des Kopfstücks 1 vorgesehen. Durch die in die Kerbnut 24 hineinragende Rastnase 12 ist die Spindel 2 in dem Kopfstück 1 axial gehalten. Dabei ist die Spindel 2 in dem Kopfstück 1 drehbar. Auf ihrer dem Außenvielkant 21 entgegen gerichteten Seite weist die Spindel 2 ein Außengewinde 25 auf. Oberhalb des Außengewindes 25 ist ein Einschraubbund 26 angeformt.

Der Ventilkörper 3 weist einen hohlzylindrischen Teil 31 auf, der mit einem Ventilstempel 32 verbunden ist. Konzentrisch zur Rotationsachse der Spindel 2 ist in den Ventilstempel 32 eine Nut 33 zur Aufnahme der Dichtscheibe 4 eingebracht. An seinem dem Ventilstempel 33 abgewandten Ende ist an dem hohlzylindrischen Teil 31 ein Außensechskant 34 angeformt. Der Außensechskant 34 dient der Verdrehsicherung des Ventilkörpers 3 innerhalb des Kopfstücks 1. Innen ist der hohlzylindrische Teil 31 mit einem Innengewinde 35 versehen.

Die Dichtscheibe 4 ist im Ausführungsbeispiel aus Kunststoff hergestellt und kreisrund ausgebildet. Dabei entspricht der Außendurchmesser der Dichtscheibe 4 im Wesentlichen dem Innendurchmesser der Nut 33. Die Dichtscheibe 4 ist über eine Mutter 5 innerhalb der Nut 33 fixiert.

Der Ventilkörper 3 ist derart in das Kopfstück 1 eingebracht, dass der Außensechskant 34 des Ventilkörpers 3 an dem Innensechskant 17 des Kopfstücks 1 anliegt, wodurch der Ventilkörper 3 in dem Kopfstück 1 verdrehsicher gehalten ist. In das Innengewinde 35 des Ventilkörpers 3 ist das Außengewinde 25 der Spindel 2 eingeschraubt, wobei die Spindel 2 über die in die Kerbnut 24 eingreifende Rastnase 12 des Kopfstücks 1 innerhalb des Kopfstücks 1 axial fixiert ist. Eine Drehung der Spindel 2 bewirkt somit eine axiale Bewegung des Ventilkörpers 3 innerhalb des Kopfstücks 1.

Bei der Montage des Ventiloberteils wird die Spindel 2 in das Kopfstück 1 eingeführt, wobei die an dem Kopftstück 1 angeformte Rastnase 12 elastisch nach außen gedrückt wird. Bei Passieren der Kerbnut 24 gleitet die Rastnase 12 über ihre Rückstellkräfte in die Kerbnut 24 ein, wodurch die Spindel 2 axial in dem Kopfstück 1 gehalten ist.

Alternativ kann auch die Spindel 2 mit einer umlaufenden Rastnase versehen sein, welche in eine in dem Kopfstück 1 angeordnete Kerbnut eingreift. In einem nicht beanspruchten Beispiel ist es weiterhin möglich, Kopfstück 1 und Spindel 2 mit einer umlaufenden Nut zu versehen, wobei ein in beiden Nuten eingreifender Rastring angeordnet ist.

## Patentansprüche

1. Ventiloberteil zum Einschrauben in eine Armatur, mit einem Kopfstück, das ein Außengewinde zum Einschrauben in eine Armatur aufweist und das von einer Spindel mittig durchsetzt ist, die in dem Kopfstück um ihre Längsachse rotierbar gelagert ist und über die ein Ventilkörper betätigbar ist, der nicht Teil der Spindel ist, wobei die Spindel (2) und das Kopfstück (1) korrespondierende Rastmittel zur formschlüssigen Verbindung miteinander aufweisen, wobei außen an der Spindel (2) eine Zylinderfläche vorgesehen ist, mit der sie in dem Kopfstück (1) radial geführt ist und in der eine Ringnut (23) zur Aufnahme eines O-Rings (62) eingebracht ist, der die Spindel (2) gegen das Kopfstück (1) abdichtet, **dadurch gekennzeichnet, dass** das Kopfstück (1) eine radial in Richtung der Spindellängsachse ragende, zumindest bereichsweise umlaufende Rastnase (12) aufweist, die oberhalb der Ringnut (23) in eine zweite in die Zylinderfläche der Spindel (2) eingebrachte, umlaufende Ringnut eingreift oder die Zylinderfläche der Spindel oberhalb der Ringnut (23) eine radial nach außen ragende, zumindest bereichsweise umlaufende Rastnase aufweist, die in eine in das Kopfstück (1) eingebrachte, die Spindel umgebende Ringnut eingreift.

2. Ventiloberteil nach Anspruch 1, **dadurch gekennzeichnet, dass** die in der Spindel angeordnete Ringnut bzw. die in das Kopfstück eingebrachte Ringnut als Kerbnut ausgebildet ist.

## Claims

1. Valve top for screwing into a fitting, having a head piece with an external thread for screwing into a fitting, through the centre of which head piece a spindle passes, which is mounted in the head piece to rotate around its longitudinal axis, and by means of which a valve body can be operated which is not part of the spindle, where the spindle (2) and the head piece (1) have corresponding means of engaging with one another to form a positive connection, where a cylinder surface is provided on the outside of the spindle (2) with which it is guided radially in the head piece (1) and in which a ring groove (23) is made for holding an O-ring seal (62) which seals the spindle (2) against the head piece, **characterised in that** the head piece (1) has an engaging tappet (12) running around at least part of its circumference which extends radially towards the lengthwise axis of the spindle, which tappet engages above the ring groove (23) in a second circumferential ring groove made in the cylinder surface of the spindle (2), or the cylinder surface of the spindle above the ring groove (23) has an engaging tappet extending radially outwards and running around at least part of its circumference, which engages in a ring groove made in the head piece (1) and surrounding the spindle.

2. Valve top in accordance with claim 1, **characterised in that** the ring groove arranged in the spindle or the ring groove made in the head piece, respectively, is formed as a notch groove.

## Revendications

1. Partie supérieure de soupape à visser dans une robinetterie, avec une pièce têtière présentant un filetage extérieur pour la visser dans une robinetterie et étant traversée en son centre par une broche qui est en appui rotatif sur son axe longitudinal dans la pièce têtière, et via laquelle est actionnable un corps de soupape qui ne fait pas partie de la broche, sachant que la broche (2) et la pièce têtière (1) présentent des crans qui s'épousent pour former ensemble une jonction par adhérence de formes, sachant qu'est prévue à l'extérieur, contre le broche (2), une surface cylindrique par laquelle elle est guidée radialement dans la pièce têtière (1) et dans laquelle a été ménagée une gorge annulaire (23) pour recevoir un joint torique (62) qui étanchéise la broche (2) par rapport à la pièce têtière (1), **caractérisée en ce que** la pièce têtière (1) présente une saillie de crantage (12) au moins localement périphérique qui dépasse radialement en direction de l'axe longitudinal de la broche, saillie qui au dessus de la gorge annulaire (23) engrène dans une seconde gorge annulaire ménagée dans la surface cylindrique de la broche (2), ou que la surface cylindrique de la broche présente, au-dessus de la gorge annulaire (23), une saillie de crantage au moins localement périphérique dépassant radialement vers l'extérieur, saillie qui engrène dans une gorge annulaire ménagée dans la pièce têtière (1) et entourant la broche.

2. Partie supérieure de soupape selon la revendication 1, **caractérisée en ce que** la gorge annulaire disposée dans la broche ou la gorge annulaire ménagée dans la pièce têtière respectivement est configurée en entaille.
